# EUROPEAN PATENT SPECIFICATION

(11) **EP 1 732 742 B1**
(45) Date of publication and mention of the grant of the patent: **10.12.2008**
(21) Application number: 05733457.5
(22) Date of filing: 24.03.2005
(51) Int. Cl.: B29C 45/27

(54) **INJECTION DEVICE**
INJEKTIONSVORRICHTUNG
DISPOSITIF D'INJECTION

(30) Priority: 24.03.2004 IT RM20040154
(43) Date of publication of application: 20.12.2006
(73) Proprietor: S.I.P.A. Societa' Industrializzazione Progettazione Automazione - S.P.A., 31029 Vittorio Veneto (IT)
(72) Inventor: ZOPPAS, Matteo, I-31015 Conegliano (IT); GIACOMAZZI, Denis, 31010 Cimadolmo (IT); VENDRASCO, Luca, I-31012 Cappela Maggiore (IT); COROCHER, Carlo, I-31015 Conegliano (IT)
(74) Representative: Cinquantini, Bruno
(86) International application number: PCT/EP2005/051385
(87) International publication number: WO 2005/090051

(56) References cited:
- WO-A-03/086734
- US-A- 4 268 241
- US-A- 5 674 439
- PATENT ABSTRACTS OF JAPAN vol. 1999, no. 14, 22 December 1999 (1999-12-22) & JP 11 240046 A (SEIKI CORP), 7 September 1999 (1999-09-07)

## Description

### Field of the invention

The present invention relates to a device for the moulding of injectable materials, in particular plastic, to prevent or in any case reduce contamination of the moulded objects when passing from moulding of one injectable material to moulding of a different material, for example during work changeovers between two different production batches.

### Prior art

Document WO-A-03086734 discloses an injection moulding device in accordance with the preamble of claim 1.

In the so-called "hot runner technique" for injection moulding of plastic, the molten plastic coming from the plastification screw is conveyed to a heated cavity - the "hot half" - from which a series of channels branch off which convey the plastic to each of the cavities or moulding impressions of a mould.

The molten plastic is therefore injected into the individual moulding cavity via an injection terminal comprising a heating tip fixed on a tip holder support by means of a centring ring nut.

When the mould is in the injection position, the tip normally extends inside a roughly cylindrical temperature-maintaining cavity formed by the die of the mould.

The tip holder support has the function of conveying the plastic and keeping it hot, by means of an electrical resistance if necessary, inside the holding cavity.

The centring ring nut has the function of centring the tip end with respect to the injection hole, which is often relatively small, less than one millimetre, fixing the tip and preventing leakages of molten plastic which would otherwise come out of the holding cavity.

The tip can have different shapes according to the type of plastic injected and has the main function of maintaining the plastic to be moulded in a fluid state in an area not heated by electrical components. In fact, by conveying the molten plastic from the holding cavity to the moulding cavity of the mould via a small enough injection hole and, more generally, by appropriate thermal design of the injection terminal, it is possible to achieve the so-called "thermal break" of the sprue, i.e. avoid or in any case considerably reduce the formation of sprues, moulding witness marks or other unsightly defects at the injection point (or points) of the end plastic object moulded, so that the limit between the plastic which always remains in the molten state in the holding chamber and the plastic of the moulded object that solidifies is located at the exact level of the injection hole.

The tip is therefore generally made of a material with good heat conductivity.

Once the mould has been fitted, during operation the molten plastic fills all the cavities including the maintaining cavity, solidifying near cold walls -like those of the die - and remaining liquid near the hot walls - like those of the tip.

During the injection phases plastic recirculation can occur in the holding cavity, i.e. molten plastic can flow from the channel inside the tip into the holding cavity and from there next into the moulding cavity.

This phenomenon is particularly problematic during work changeovers when switching from plastic of one colour to another: in this case traces of plastic of the old colour can flow out of the holding cavity, even after several moulding operations at the beginning of the new work batch, and said traces contaminate a certain number of moulded products until the phenomenon recedes.

The phenomenon of recirculation is harmful also when moulding plastic materials that are particularly sensitive to deterioration: when a certain amount of plastic remains at length in the holding cavity, it can deteriorate and be slowly released, contaminating the moulded end products.

To solve said problems "jigs" have been suggested in the form of bushes made of a plastic which melts at a higher temperature than that of the holding chamber and having the form of said cavity. In this way the "jig" fills all the cavity and does not allow the molten plastic to occupy it.

Some drawbacks of this solution include deterioration of the jigs due to the high operating temperatures, for example, the relatively high cost of the jigs themselves and the need for periodical machine standstills to replace them.

The aim of the present invention is to provide a device for the injection of plastic materials which prevents or in any case reduces the phenomenon of recirculation described above and represents an improvement on the injection devices currently known.

### Summary of the invention

Said aim is achieved, according to the present invention, by a device for injection moulding with the features of claim 1. The device comprises:
- a hollow die provided with a recess and at least one injection hole in an area of said recess, where said at least one injection hole is adapted to inject the material to be moulded into a cavity of a mould;
- at least one heating tip which extends inside the recess forming, together with the recess itself, at least part of a holding cavity, where the tip is designed to heat the material to be moulded possibly contained in the holding chamber;
- feed devices designed to convey the material to be moulded into the holding chamber.

The holding cavity comprises a narrow section which separates a rear area of the holding cavity, farther from the area or areas in which the feed devices introduce the material to be moulded into the holding cavity, from a front area of the holding cavity, nearer to the area or areas in which the feed devices introduce the material to be moulded into the holding cavity, where the passage sections via which the injectable material can pass into the holding cavity at the narrow section are substantially smaller than the passage sections upstream and downstream of it and at least in the surrounding area.

In this way it is possible to separate the maintaining chamber into two portions, one with a very good rapid turnover of fluid material to be moulded, and the other with a turnover that may be poor or even zero; the narrow section reduces or completely prevents the exchange of fluid material to be moulded between the two areas, thus reducing the phenomena of recirculation and contamination of the moulded parts when a new production batch is started using a different material to be moulded, for example a different type of plastic.

Further advantages that can be obtained with the present invention will become more apparent, to a person skilled in the art, from the following detailed description of a particular embodiment given by way of non-limiting example, with reference to the following figures.

### List of Figures

Figure 1 shows schematically a side section view of a first embodiment of an injection device according to the present invention;
Figure 1A shows schematically an enlarged detail of Figure 1;
Figure 2 shows an exploded schematic perspective view of the tubular hose and central body of the heating tip of the device of Figure 1;
Figures 3 and 4 show respectively a side view in section of a second and third embodiment of an injection device according to the present invention;
Figure 5 shows schematically a section view of a detail of the device of Figure 4, in a particular operating condition;
Figure 6 shows schematically a further enlarged detail of the view of Figure 5.

### Detailed description of the invention

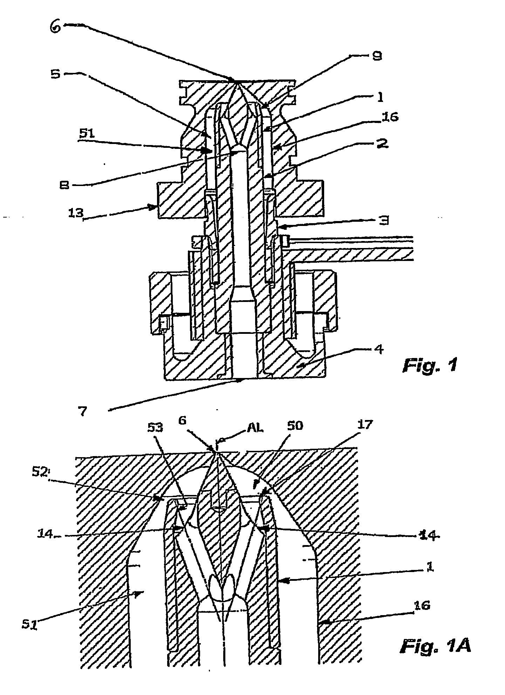

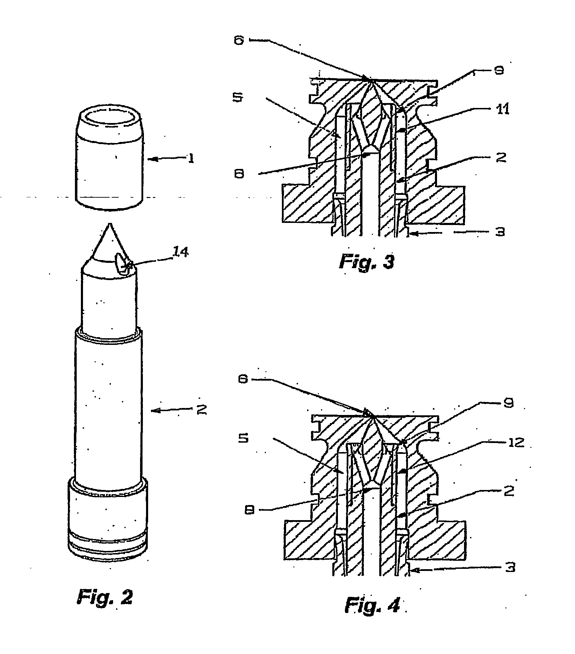

Figures 1, 1A and 2 relate to a first embodiment of an injection device according to the present invention; in said embodiment the injection device comprises a tip holder support 4 and a heating tip fixed on it by means of the centring ring nut 3.

The heating tip comprises a body 2 inside which there is provided a channel 8 adapted to be connected, via appropriate ducts, to a hot half of a mould for injection moulding of plastic materials. The reference 7 indicates the end of the channel 8 on the side of the hot half.

The reference 13 indicates a hollow die nearest to a moulding cavity - not shown - of the mould.

During injection the plastic material coming from the hot half of the mould via the internal channel 8 comes out of the body 2 through the outlet orifices 14 and, guided by the conical walls of the recess 16 of the die, reaches the injection hole 6 and then the moulding cavity designed to give the moulded object its final form.

The tip holder support 4 and the body 2 in this embodiment are heated by appropriate electrical resistances (not shown) in order to maintain in a fluid state at least the majority of the plastic that fills the holding cavity 5, which surrounds the body 2 and is defined by the walls of the recess 16, the body 2, the centring ring nut 3 and the tube 1 - the latter described in greater detail below.

As already mentioned, the suitably small size of the injection hole 6 and appropriate thermal sizing in general permit the above mentioned "thermal break" of the sprue or witness mark of the moulded parts.

According to the present invention, on the end of the heating tip nearest the injection hole 6 and the outlet orifices 14 a tubular body 1 is fitted - in the present embodiment example a tubular hose or simply hose - the open end of which 17, nearest the injection hole, forms together with the walls of the recess 16 a narrow section 52 (Figure 1A) which divides the holding cavity 5 into two portions, a front portion 50 - nearer the outlet orifices 14 and the injection hole 6 - and a rear portion 51, farther from the outlet orifices 14 and the injection hole 6; the passage sections through which the fluid plastic can pass into the holding cavity 5 at the narrow section 52 are substantially smaller than the passage sections upstream and downstream of it and at least in the surrounding area.

In the present embodiment the tube 1 and the wall of the recess 16 have a substantially axial-symmetrical form with respect to the longitudinal central axis AL (Figure 1A) of the heating tip, and therefore the narrow section 52 has a substantially ring-shaped form, also axial-symmetrical.

In the present embodiment example the tube 1 forms a cylindrical wall 53 which surrounds the outlet orifices 14 of the tip, extends downstream of them towards the injection hole 6, thus positioning the narrow section 52 downstream of the outlet orifices 14; in this way the front area 50 of the holding chamber 5 is washed very effectively by the flow of molten plastic material coming out of the orifices 14, ensuring a very rapid turnover of said molten plastic in the front portion 50; the rear portion 51 on the other hand, since it is relatively isolated from the narrow section 52, has a much lower turnover of plastic with the front portion 50.

Preferably the tube 1 is made of a material with relatively low heat conductivity and in any case lower than that of the body 2 - or in any case of the central body of the heating tip around which the tubular hose is fitted - so that the plastic accumulated in the rear portion 51 tends to solidify more than the plastic present in the front portion 50; this further reduces, or totally blocks, the mixing and exchange of plastic between the front and rear areas and leads in some cases to the formation of an actual solidified plastic sleeve in the rear portion 51.

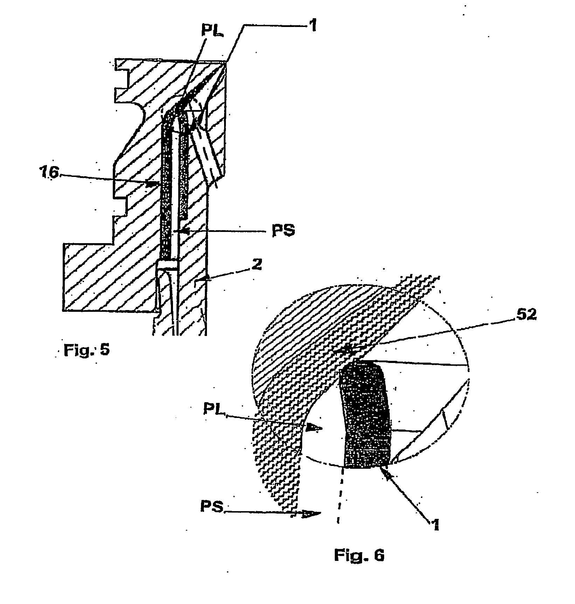

An example of a situation that can be obtained in a device according to the present invention is shown in Figures 5 and 6: in the particular operating condition shown in said figures the plastic to be injected is solidified in the area nearest the wall 16 of the recess of the die, creating a roughly cylindrical external sleeve PL of solidified, or in any case more viscous, plastic. Near the walls of the body 2, which are warmer, the plastic to be injected remains liquid or in any case more fluid (reference PL). In the particular operating situation of Figures 5, 6 the solid plastic sleeve PS completely plugs the narrow section 52, preventing all exchange of fluid plastic between the front portion 50 and the rear portion 52 of the maintaining chamber.

In this way it has been found that the problem of recirculation of plastic accumulated in the maintaining chamber 5 is considerably reduced, in particular the phenomenon subsequent to a work changeover, when switching for example from moulding of plastic in one colour to moulding of plastic in another colour: according to the teachings of the present invention, far fewer moulding operations are required to purge the system than without the tube 1, in order to obtain moulded pieces without coloured streaks or in any case without traces of plastic from the previous batch.

With respect to the known solution of the "jigs" or plastic bushes with higher melting point, with the present invention it is possible to reduce the purging operations with lower costs and without the risk of contaminating the plastic injected with remains of the high-melt plastic of any jigs that have possibly deteriorated; furthermore machine standstill and maintenance times are considerably reduced, since any deposits of solidified plastic present in a device according to the present invention do not have to be removed and replaced, or in any case can remain in the maintaining chamber 5 for much longer periods.

Figures 3, 4 concern another two embodiments of a device for injection moulding according to the present invention.

In the embodiment of Figure 3 the edge of the open end of the tubular body 11, which forms the narrow section, has a substantially cylindrical shape instead of being bent towards the central longitudinal axis AL of the heating tip (Figure 1A).

In the embodiment of Figure 4 the edge of the open end of the tube 12, which forms the narrow section, is substantially bent towards the outside of the heating tip, opening out like a trumpet.

The moulding device can be applied also to the moulding of injectable materials other than plastic; the tube 1 of predefined length can be replaced by other containment devices designed to contain and guide the flow of material to be moulded, or injected, coming out of the outlet orifices 14 towards the injection hole 6 at least as far as the narrow section; the tube 1 can form an integral part of the tip or fit on it throughout its length, or only for a part, it can have a cylindrical shape or another shape suitable for the purpose. The tube 1 can be fixed in various ways: glued, crimped, screwed or interference fit. Inside the recess of the die several nozzle bodies 2 can be housed, and they can be combined with respective outlet or outflow orifices, from which the fluid plastic flows out.

According to the application and the type of plastic to be injected, different nozzle configurations are possible. At the end of the body 2 one or more plastic outflow holes can be provided, and generally each hole is combined with a tip to transmit the heat received from the heated body 2 as near as possible to the injection hole. In some nozzle variations with one tip several outflow channels are combined.

The tips can be located not only near the injection hole 6 and the free end of the bodies 2, but also in other areas of the bodies, for example near their base, or the plastic material to be injected can be introduced into the maintaining chamber or air space 5 by means of appropriate feed devices not necessarily the same, but also different, from the feed channel inside the body 2 which terminates in the outlet orifices 14.

## Claims

1. Injection device for moulding of plastic objects, comprising
a hollow die (13) provided with a recess (18) and one or more injection holes (6) for plastic in an area of said recess,
an elongated body (2), positioned inside the recess (16), provided at one end with one or more heating tips, each heating tip being combined with at least one outflow orifice (14) for plastic and with a respective injection hole (6) for plastic, the elongated body (2) forming, with an internal wall of said recess (16), a ring-shaped air space (50, 51) in said recess (16),
a tube (1) fitted around said one or more tips near to the injection hole, said tube (1) having an open end (17) nearest the injection hole (6),
whereby said open end (17) forms together with the walls (16) of the recess a narrow section (52)
and said tube (1) surrounds the at least one outflow orifice (14) at a distance such as to leave a space for outflow of the plastic, whereby the flow of plastic coming out of said at least one outflow orifice (14) is contained and guided towards said at least one injection hole,
whereby said narrow section separates a first portion (51) of said air space distal from said injection hole, from a second portion (50) of the air space proximal to said injection hole (6), the area of said narrow section (52) being substantially smaller than the respective areas of the sections of said proximal and distal areas **characterized in that** a centering ring nut (3) is provided for forming the ring-shaped air space (50, 51) in said recess and **in that** said tube (1) is not in contact with said internal wall.

2. Device according to claim 1, wherein said open end (7) of the tube (1) has one of the following shapes: substantially cylindrical, bent towards the central longitudinal axis of the at least one tip, bent towards the outside of the tip.

3. Device according to one or more claims from 1 to 2, wherein the tube (1) is adapted to heat the plastic in the distal area (51) of the air space less than in the proximal area (50) of the air space.

4. Device according to claim 3, wherein the tube has a substantially lower thermal conductivity than the elongated body (2).

## Patentansprüche

1. Einspritzvorrichtung zum Gießen von Gegenständen aus Kunststoff, welche umfasst:
- ein hohles Spritzgießwerkzeug (13), welches eine Einsenkung (16) sowie in einem Bereich der genannten Einsenkung ein oder mehrere Einspritzlöcher (6) für Kunststoff aufweist,
- einen länglichen Körper (2), welcher sich im Innern der Einsenkung (16) befindet und welcher an einem Ende mit einer oder mehreren Heizspitzen versehen ist, wobei jede Heizspitze mit mindestens einer Ausströmöffnung (14) für Kunststoff und mit einem zugehörigen Einspritzloch (6) für Kunststoff verbunden ist, wobei dieser längliche Körper (2) zusammen mit einer inneren Wandung der genannten Einsenkung (16) einen ringförmigen Luftraum (50, 51) in der genannten Einsenkung (16) bildet,
- ein Rohr (1), welches um die genannte eine oder mehrere Spitzen in der Nähe des Einspritzlochs angebracht ist, wobei das genannte Rohr (1) an der dem Einspritzloch (6) am nächsten gelegenen Stelle ein offenes Ende (17) dergestalt aufweist, dass dieses genannte offene Ende (17) zusammen mit den Wandungen der Einsenkung (16) einen engen Querschnitt (52) bildet und das genannte Rohr (1) die mindestens eine Ausströmöffnung (14) in einem solchen Abstand umgibt, dass Platz zum Ausströmen des Kunststoffs bleibt, wodurch der Kunststoffstrom, der aus der genannten mindestens einen Ausströmöffnung (14) austritt, eine Art Einfassung erfährt und in Richtung auf das genannte mindestens eine Einspritzloch gelenkt wird., wodurch der genannte enge Querschnitt einen ersten Bereich (51) des genannten Luftraums, welcher vom genannten Einspritzloch weiter weg liegt, von einem zweiten Bereich (5) des Luftraums, der dem Einspritzloch (6) näher liegt, abtrennt, wobei die Fläche des genannten engen Querschnitts (52) wesentlich kleiner ist als die zugehörigen Flächen der Querschnitte des näher liegenden und des weiter weg befindlichen Bereichs,
**dadurch gekennzeichnet, dass** eine zentrierende Ringmutter (3) vorhanden ist, um den ringförmigen Luftraum (50, 51) in der genannten Einsenkung zu bilden und dafür zu sorgen, dass das genannte Rohr (1) keinen Kontakt mit der genannten inneren Wandung hat.

2. Vorrichtung nach Anspruch 1, bei welcher das genannte offene Ende (17) des Rohres (1) eine der folgenden Gestalten aufweist: im Wesentlichen zylindrisch, in Richtung auf die zentrale Längsachse der mindestens einen Spitze gebogen, in Richtung auf die Außenseite der Spitze gebogen.

3. Vorrichtung nach einem der Ansprüche 1 und 2 oder beiden, bei welcher das Rohr (1) dergestalt ausgelegt ist, dass der Kunststoff in dem weiter weg befindlichen Bereich (51) des Luftraums weniger stark erhitzt wird als in dem näher gelegenen Bereich (50) des Luftraums.

4. Vorrichtung nach Anspruch 3, bei welcher das Rohr eine wesentlich niedrigere Wärmeleitfähigkeit als der längliche Körper (2) aufweist.

## Revendications

1. Dispositif d'injection pour le moulage d'objets en plastique, comprenant
un moule creux (13) muni d'un renfoncement (16) et d'un ou plusieurs trou(s) d'injection (6) de matière plastique dans une zone dudit renfoncement,
un corps allongé (2) positionné dans le renfoncement (16), muni à une extrémité d'une ou de plusieurs pointes chauffantes, chaque pointe chauffante étant combinée à au moins un orifice d'écoulement (14) de matière plastique et à un trou d'injection respectif (6) de matière plastique, le corps allongé (2) formant, avec une paroi interne dudit renfoncement (16) un espace d'air de forme annulaire (50, 51) dans ledit renfoncement (16) lui-même,
un tube (1) situé autour desdites une ou plusieurs pointes à proximité du trou d'injection, ledit tube (1) ayant une extrémité ouverte (17) au plus proche du trou d'injection (6),
moyennant quoi ladite extrémité ouverte (17) forme ensemble avec les parois (16) du renfoncement une section étroite (52)
et ledit tube (1) entoure ledit au moins un orifice d'écoulement (14) à une distance laissant un espace pour l'écoulement de la matière plastique, moyennant quoi le flux de matière plastique provenant dudit au moins un orifice d'écoulement (14) est contenu et guidé vers ledit au moins un trou d'injection,
moyennant quoi ladite section étroite sépare une première partie (51) dudit espace d'air éloignée dudit trou d'injection, d'une seconde partie (50) de l'espace d'air proche dudit trou d'injection (6), la superficie de ladite section étroite (52) étant sensiblement inférieure aux superficies respectives des sections desdites zones proche et éloignée, **caractérisé en ce qu'**un écrou annulaire de centrage (3) est prévu pour former l'espace d'air de forme annulaire (50, 51) dans ledit renfoncement et **en ce que** ledit tube (1) n'est pas en contact avec ladite paroi interne.

2. Dispositif selon la revendication 1, dans lequel ladite extrémité ouverte (7) du tube (1) a l'une des formes suivantes : sensiblement cylindrique, incurvée vers l'axe longitudinal central de l'au moins une pointe, incurvée vers l'extérieur de la pointe.

3. Dispositif selon une ou plusieurs des revendications 1 à 2, dans lequel le tube (1) est adapté pour moins chauffer la matière plastique dans la zone éloignée (51) de l'espace d'air que dans la zone proche (50) de l'espace d'air.

4. Dispositif selon la revendication 3, dans lequel le tube a une conductivité thermique sensiblement inférieure à celle du corps allongé (2).
